# EUROPÄISCHE PATENTSCHRIFT

(11) **EP 1 719 665 B1**
(45) Veröffentlichungstag und Bekanntmachung des Hinweises auf die Patenterteilung: **23.07.2008**
(21) Anmeldenummer: 06009152.7
(22) Anmeldetag: 03.05.2006
(51) Int. Cl.: B60R 9/055, B60R 9/06

(54) **Gepäckkoffer**
Luggage carrier
Housse porte-bagages

(30) Priorität: 03.05.2005 DE 102005020627
(43) Veröffentlichungstag der Anmeldung: 08.11.2006
(73) Patentinhaber: Jäger, Hermann, 83620 Kleinhöhenrain (DE); Trachte, Dieter, 80333 München (DE)
(72) Erfinder: Jäger, Hermann, 83620 Kleinhöhenrain (DE); Trachte, Dieter, 80333 München (DE)
(74) Vertreter: Beetz & Partner

(56) Entgegenhaltungen:
- DE-U1-0202004 011 57
- DE-U1-4202004 017 60
- FR-A- 1 147 612
- US-A1- 2004 094 589

## Beschreibung

Die Erfindung betrifft einen Gepäckkoffer zur zusätzlichen Gepäckbeförderung an Außenflächen von Kraftfahrzeugen, der mittels eines Befestigungssystems an den Außenflächen befestigbar ist, eine stabile Bodenplatte aufweist, die ggf. durch einen umlaufenden Rahmen verstärkt ist und bei Nichtgebrauch auf ein geringes Staumaß flach zusammenklappbar ist.

Ein derartiger gattungsgemäßen Gepäckkoffer ist aus der DE 20 2004 017 604 U1 bekannt, wobei der Gepäckkoffer neben der stabilen Bodenplatte ein stabiles Rückenteil bzw. einen stabilen Deckel oder stabile Seitenwände sowie diese verbindendes textiles Material umfasst. Der Hauptnachteil dieses Gepäckkoffers besteht in seiner Instabilität, insbesondere bei nur teilweiser Beladung, da die stabilen Teile des Koffers dann teilweise zusammenklappen und in diesem Zustand durch separate Riemen oder ein flexibles Netz gehalten werden müssen, um unerwünschte Bewegungen der Teile des Koffers im Betrieb zu vermeiden.

Die De 20 2004 011 570 U1 beschreibt einen Dachaufbau für Kraftfahrzeuge, mit einer Decken- und Bodenplatte, die über entsprechende Seitenwände miteinander zur Ausbildung eines geschlossenen Innenraums dienen. Der Dachaufbau kann in eine Nutz- und eine gefaltete Stellung gebracht werden.

Der Erfindung liegt die Aufgabe zu Grunde, einen Gepäckkoffer derart zu gestalten, dass dieser auch im aufgeklappten Zustand eine stabile Form einnimmt.

Die Aufgabe wird durch die Merkmale des Patentanspruchs 1 gelöst. Die Unteransprüche beinhalten vorteilhafte Ausgestaltungen der Erfindung.

Der erfindungsgemäße Gepäckkoffer erhält beim Hochklappen oder beim Einsetzen der Seitenwände eine besonders stabile Form, da das textile Obermaterial mit Versteifungsrippen versehen ist. Zum Verstauen des Gepäckkoffers brauchen die Seitenwände nur auf die Bodenplatte geklappt oder entnommen werden und das Oberteil fällt flach in eine rechteckige Form zusammen.

Vorteilhafterweise kann als Befestigungssystem ein Haken- und/ oder Gurtsystem als integraler Bestandteil des Gepäckkoffers ausgebildet sein. Dadurch wird erreicht, dass zur Befestigung am Kraftfahrzeug kein separates Trägersystem notwendig ist.

Hierbei ist von Vorteil, wenn das aus Haken, Spann- und/oder Seitengurten bestehende Haken- und/oder Gurtsystem in einem nach innen abgeschlossenen und absperrbaren Funktionsfach unterbringbar ist, das auch in beladenem Zustand von außen zugänglich ist. Damit ist der Gepäckkoffer auch in beladenem Zustand abnehmbar und bei versperrtem Funktionsfach gegen unbefugtes Abnehmen geschützt.

In einer anderen Variante kann das Befestigungssystem als separates System ausgebildet sein, wobei die Anbringung des Gepäckkoffers mittels einer Adapterplatte und/oder entsprechenden Adaptern erfolgt. Das Befestigungssystem ist hierbei über eine Spannvorrichtung an die Außenfläche des Kraftfahrzeuges anpassbar. Als Adapter können beispielsweise Schnappverschlüsse Verwendung finden. Das Befestigungssystem besteht hierbei aus der am Fahrzeug verbleibbaren Adapterplatte (mit eventuell vorgesehenen Standfüßen und/oder Saugnäpfen bzw.

Gummipuffern) und der Bodenplatte, die mit der Adapterplatte entsprechend lösbar verbindbar ist.

Eine wasserdichte Schutzhülle kann an Verzurrknöpfen des Gepäckkoffers befestigt werden. Dadurch ist der Gepäckkbffer vor Schmutz und Feuchtigkeit geschützt.

Zur Arretierung der klapp- oder herausnehmbaren Seitenwände und zum Schutz des Funktionsfaches kann an der Bodenplatte eine unklappbare Dämmwand vorgesehen sein.

An der Bodenplatte des Gepäckkoffers können an einer Seite ein Griff und an der anderen Seite Rollen angebracht sein, so dass der Gepäckkoffer wie ein Trolley verwendet werden kann.

Ausführungsbeispiele der Erfindung werden nachfolgend an Hand der Figuren näher erläutert.
Hierbei zeigen:

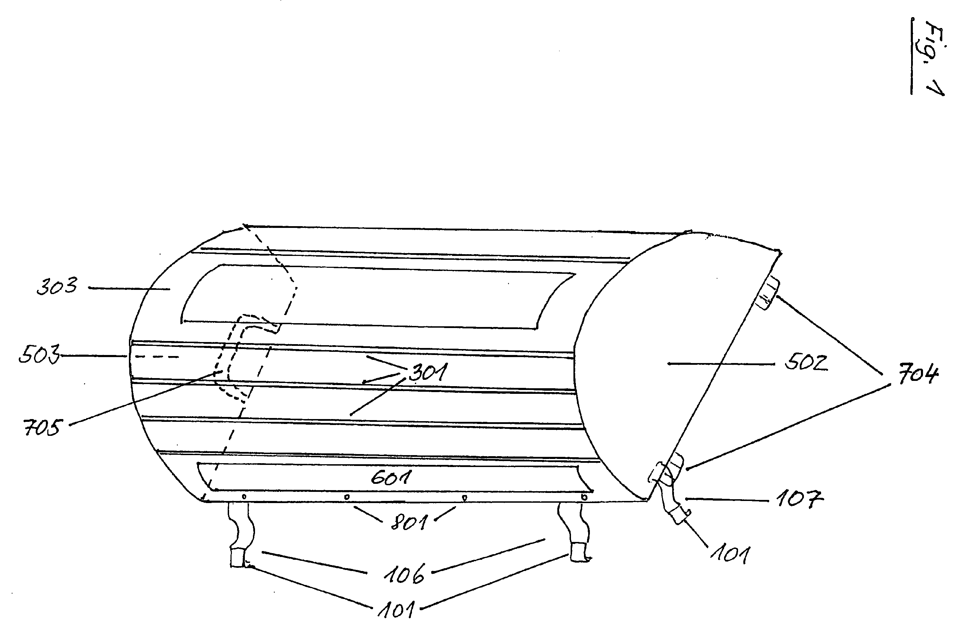

- Fig. 1: den erfindungsgemäßen Gepäckkoffer im aufgeklappten Zustand
- Fig. 2: eine Prinzipskizze des Gepäckkoffers im zusammengeklappten Zustand
- Fig. 3: die Befestigung des Gepäckkoffers mit integriertem Haken- und Gurtsystem
- Fig. 4: ein separates Haken- und Gurtsystem für die Gepäckkofferbefestigung
- Fig. 5 u. 6: Bodenplatte und Seitenwände des Gepäckkoffers mit einer Dämmwand

Der Gepäckkoffer weist eine stabile Bodenplatte 501 und ein Oberteil 303 aus wasserdichtem Textilmaterial auf. Steife Seitenwände 502 und 503 sind scharnierartig mit der Bodenplatte 501 verbunden oder herausnehmbar gestaltet. Da das Textilmaterial des Oberteils 303 mit Versteifungsrippen 301 versehen ist, erhält der Gepäckkoffer bei hochgeklappten bzw. eingesetzten Seitenwänden 502 und 503 eine sehr stabile Form, die auch bei nur teilweise beladenem Gepäckkoffer bestehen bleibt.
Für einen vom Kraftfahrzeug unabhängigen Transport ist der Gepäckkoffer an seiner Bodenplatte mit Rollen 704 und einem Handgriff 705 versehen und kann somit wie ein Trolley benutzt werden.

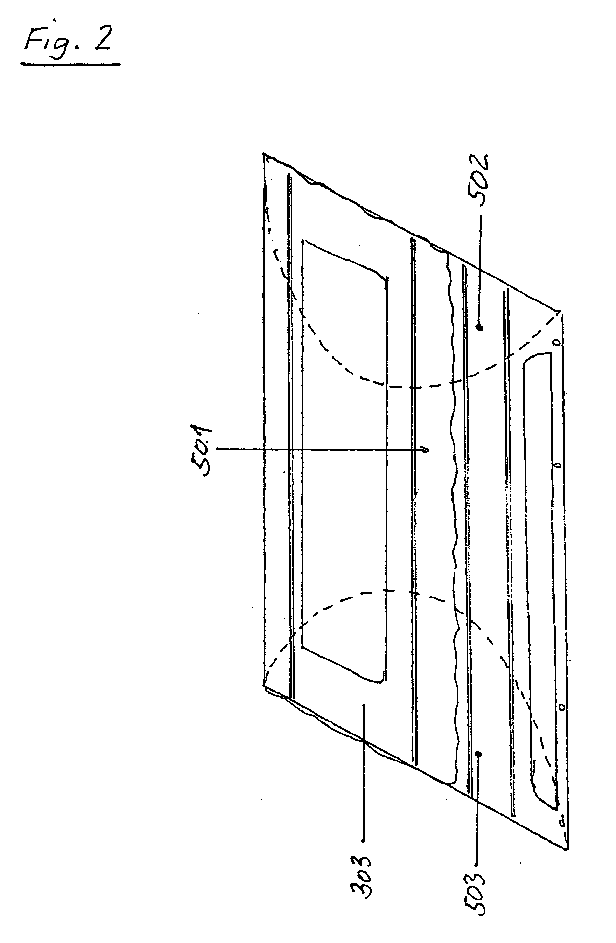

Nach dem Umklappen der Seitenwände 502 und 503 fällt das Textilmaterial des Oberteils 303 flach in eine rechteckige Form zusammen (Fig. 2) und so kann der Gepäckkoffer problemlos im Kofferraum des Kraftfahrzeugs mitgeführt werden.

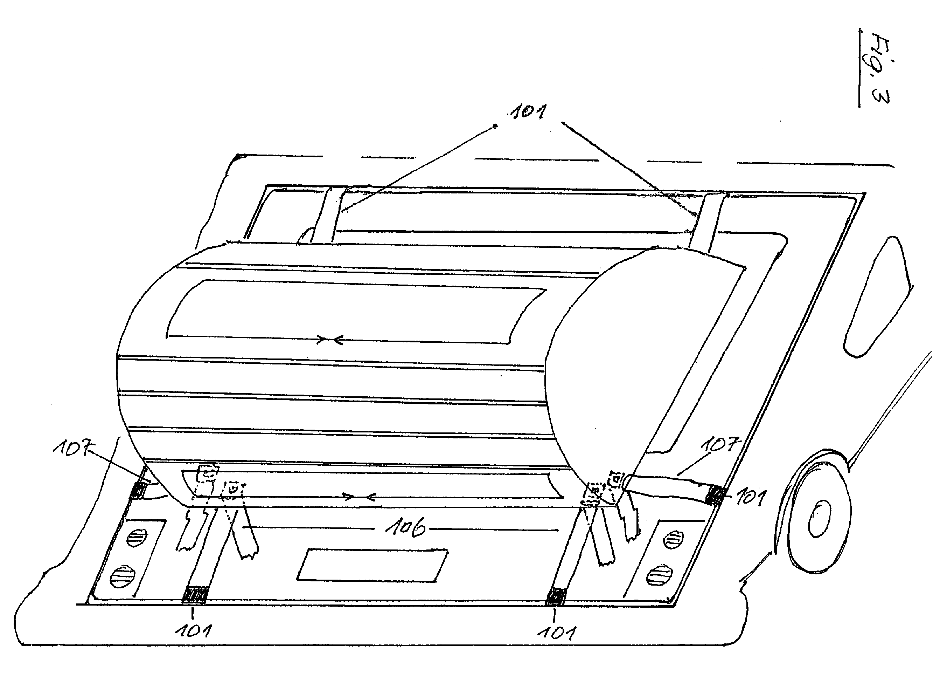

Nach Figur 3 ist der Gepäckkoffer mit einem integrierten Befestigungssystem 100 zur Befestigung am Kraftfahrzeug versehen. Die Haken 101 und 105 greifen in den Falz der Kofferraumklappe ein und werden mit Hilfe der unteren Spanngurte 106 gegeneinander verspannt. Die beiden Seitenspanngurte 107 greifen mit ihren Haken 101 ebenfalls in den Falz der Kofferraumklappe ein und sichern den Gepäckkoffer zusätzlich gegen seitliches Verrutschen. Da die Spanneinrichtungen der Spanngurte 106 und 107 in einem von außen zugänglichen Funktionsfach 601 angeordnet sind, sind diese auch im beladenen Zustand des Gepäckkoffers zugänglich. Andererseits kann der Zugriff zu den Spanneinrichtungen durch Abschließen des Funktionsfaches 601 gesichert werden.

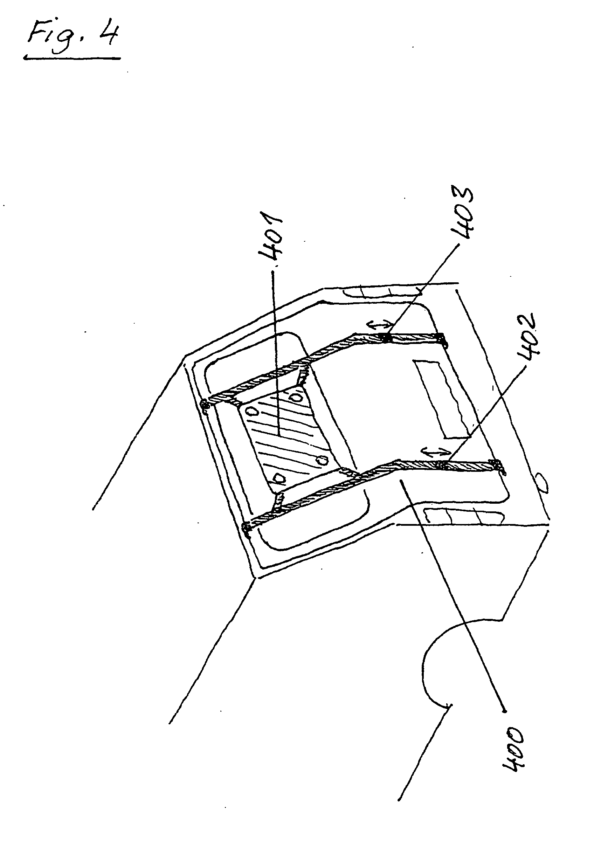

Die Figur 4 zeigt eine andere Befestigungsmöglichkeit mit Hilfe eines separaten Befestigungssystems 400. Eine Adapterplatte 401 für die Anbringung des Gepäckkoffers wird über Spannvorrichtungen 402 und 403 an der Heckklappe befestigt.

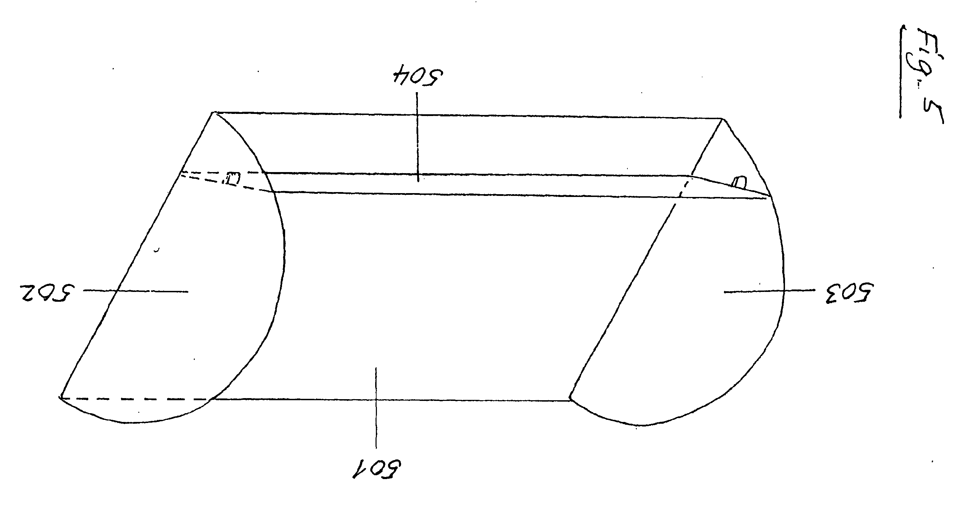

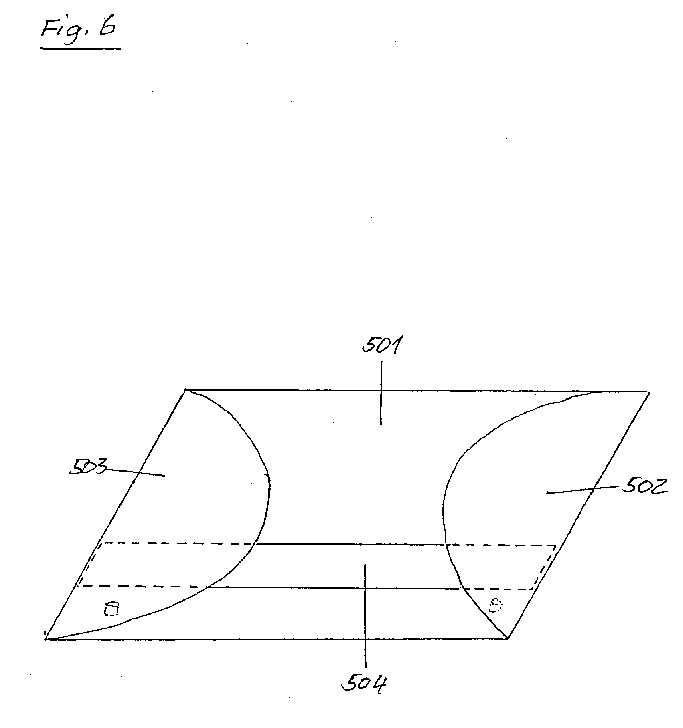

Um die Seitenwände 502 und 503 in der aufgeklappten Position zu arretieren, ist an der Bodenplatte 501 noch eine Dämmwand 504 angelenkt (Fig. 5 und 6).

Die Bodenplatte 501 kann weiterhin durch einen umlaufenden Rahmen verstärkt sein. Weiterhin können beispielsweise 2 Aluschienen mit der Bodenplatte 501 verbunden sein. Es können weiterhin Standfüße vorgesehen sein, die mit den Schienen verbunden sind. Die Schienen und/oder der Rahmen können in die Bodenplatte 501 integriert sein. Die Standfüße können mit Puffern, beispielsweise Gummipuffern, aus elastischem Material versehen sein. Diese Puffer können beispielsweise derart ausgebildet sein, dass sie auf einer der Bodenplatte 501 zugewandten Seite eine an die Standfüße angepasste Öffnung aufweisen, so dass die Puffer über die Standfüße gesteckt werden können. Auf der der Bodenplatte abgewandten Seite der Puffer ist deren Querschnitt vergrößert, um die Auflagefläche mit der Außenfläche zu vergrößern. Die beispielsweise Puffer können als eine Art Silentblock wirken. Die Puffer können als Saugnäpfe ausgebildet sein, wobei beispielsweise 4 derartige Puffer an den Eckbereichen der Bodenplatte 501 vorgesehen sein können. Durch die vorgenannten Puffer kann ein sehr stabiler Sitz des Gepäckkoffers auf der Außenfläche erzielt werden und es kann zusätzlich die Oberfläche der Außenfläche geschont werden. Die vorgenannten Standfüße und/oder Puffer können auch für die Adapterplatte eingesetzt werden.

Weiterhin können die mit der Außenfläche in Verbindung stehenden Elemente der verschiedenen Ausführungen mit einer rutschfesten, gummierten Unterlage, mit Saugnäpfen oder Magneten versehen sein. Alle Varianten können an der oberen Kante des Bodenteils mit Laschen bzw. Bügeln zur Befestigung am Haltesystem ausgestattet sein. Alle Ausführungen können zusätzlich mit Spanngurten und Haken zur Seitenstabilisierung am seitlichen Falz des Kraftfahrzeugs ausgestattet sein.

Vorzugsweise abnehmbare Abstandshalter können integraler Bestandteil aller Ausführungen sein. Diese Abstandshalter können durch die Standfüße mit den Puffern bzw. Saugnäpfen gebildet sein. Bei allen Lösungen kann das Bodenteil so ausgeformt sein, dass es dem Profil der Fahrzeugoberfläche folgt (z.B. für Heckscheibenwischer). Eine vorzugsweise abnehmbare wasserdichte Schmutz- und Regenhülle kann Bestandteil der Gepäcktasche sein. Die Gepäcktasche kann zwei wannenförmige, trennbare Hälften enthalten, die ineinander stapelbar sind und der Form des Kofferraums des jeweiligen Fahrzeugs angepasst sein können. Bei allen Ausführungen kann das Oberteil aus widerstandfähigen Kunststoffmaterialien bestehen. Alle Gepäckkoffer können weiterhin mit einer Bremsleuchte versehen sein, die mittels Kabel oder kabellos ansteuerbar ist.

Die verschiedenen Kofferkonstruktionen der Erfindung können fest oder lösbar mit dem Befestigungssystem ausgestattet sein.

Ein am Gepäckkoffer befestigtes Gurtsystem besitzt z.B. Haken aus Kunststoff oder anderem geeignetem Material, die am Falz des Kofferraumdeckels von Limousinen oder Cabriolets, am Heckdeckel von Steilheckfahrzeugen, am Türfalz (zur Dachbefestigung) oder sonstigen äußeren Befestigungspunkten angebracht werden. Eine Spannvorrichtung garantiert festen Sitz am Fahrzeug. Die Gurte können längenvariabel sein. Zur Dachbefestigung kann der Spannriemen durch die Tür geführt und am Haltegriff oder sonstigen Befestigungspunkten im Fahrzeuginneren mittels Haken, Klammern oder Klettverschluss fixiert werden.

Ein vorzugsweise fahrzeugspezifischer Bügel kann etwa am oberen Falz der Heckklappe eingehängt werden. Der Bügel kann längenvariabel sein. Der Bügel kann mit einem Abstandshalter versehen sein. Am Bügel verankert sich der Koffer mittels Laschen oder Bügel, die an der oberen Kante des Bodenteils des Koffers installiert sind. Zum unteren Klappenfalz wird der Gepäckkoffer durch einen Gurt (z.B. in der Funktionstasche - absperrbar) verspannt.

Es kann auch eine Adapterplatte (Metall und/ oder Kunststoff) mittels eines Gurtsystems am Fahrzeug befestigt werden. An ihr kann der Gepäckkoffer vorzugsweise absperrbar verankert werden.

Die mit der Erfindung erzielten Vorteile sind unter anderem:
- der Autokoffer kann dank eines einfachen Befestigungssystems problemlos und schnell an diversen Stellen jedes Kraftfahrzeugs (Kofferraumdeckel, Heckklappe, Dach) angebracht werden,
- ein Grundträger ist nicht notwendig,
- gegenüber herkömmlichen Systemen werden durch bessere Aerodynamik Kraftstoffverbrauch und Windgeräusche verringert,
- bei Nichtbenutzung kann der Gepäckkoffer ohne nennenswerten Platzanspruch im Kofferraum mitgeführt werden (z.B. auf Urlaubsreisen),
- der Autokoffer kann preiswert hergestellt werden,
- das System ist auch für Cabrios geeignet und
- bei Fahrzeugwechsel kann das System weiter verwendet werden.

## Patentansprüche

1. Gepäckkoffer zur zusätzlichen Gepäckbeförderung an Außenflächen von Kraftfahrzeugen, der mittels eines Befestigungssystems (100) an den Außenflächen befestigbar ist, eine stabile Bodenplatte (501) aufweist und bei Nichtgebrauch auf ein geringes Staumaß flach zusammenklappbar ist, wobei der Gepäckkoffer ein an der Bodenplatte (501) befestigtes Oberteil (303) aus wasserdichtem Textilmaterial sowie im Kofferinneren an der Bodenplatte (501) scharnierartig befestigte oder herausnehmbare steife Seitenwände (502, 503) umfasst,
**dadurch gekennzeichnet, dass**
das durch zwischen den Seitenwänden (502, 503) mittels Versteifungsrippen (301) versteifte textile Oberteil (303) nach Umklappen der Seitenwände (502, 503) auf die Bodenplatte (501), oder nach deren Herausnahme, auf das flache Staumaß zusammenklappt, wobei an der Bodenplatte (501) eine umklappbare Dämmwand (504) zur Arretierung der Seitenwände (502, 503) angeordnet ist.

2. Gepäckkoffer nach Anspruch 1, **dadurch gekennzeichnet, dass** das Befestigungssystem (100) als integraler Bestandteil des Gepäckkoffers ausgebildet ist.

3. Gepäckkoffer nach zumindest einem der vorstehenden Ansprüche, **dadurch gekennzeichnet, dass** in den Gepäckkoffer ein von außen zugängliches, nach innen abgeschlossenes und absperrbares Funktionsfach (601) zur Aufnahme des Haken- und Gurtsystems (100) integriert ist.

4. Gepäckkoffer nach zumindest einem der Ansprüche 1 bis 3, **dadurch gekennzeichnet, dass** das Befestigungssystem (100), Haken (105) sowie Spanngurte (106) und Seitengurte (107) mit Haken (101) umfasst.

5. Gepäckkoffer nach zumindest einem der Ansprüche 1 bis 4, **dadurch gekennzeichnet, dass** das Befestigungssystem (100) als separates System (400) zur Befestigung am Kraftfahrzeug ausgebildet ist und Adapter und/oder eine Adapterplatte (401) zur Befestigung des Gepäckkoffers aufweist.

6. Gepäckkoffer nach Anspruch 5, **dadurch gekennzeichnet, dass** das separate System (400) aus Gurten gebildete Spannvorrichtungen (402, 403) zur Anpassung an die Außenfläche des Kraftfahrzeuges aufweist.

7. Gepäckkoffer nach zumindest einem der Ansprüche 1 bis 6, **dadurch gekennzeichnet, dass** der Gepäckkoffer Verzurrknöpfe (801) für die Befestigung einer Schutzhülle aufweist.

8. Gepäckkoffer nach zumindest einem der Ansprüche 1 bis 7, **dadurch gekennzeichnet, dass** der Gepäckkoffer im Bereich der Bodenplatte (501) auf einer Seite mit Rollen (704), und auf der anderen Seite mit einem Griff (705) versehen ist.

9. Gepäckkoffer nach zumindest einem der Ansprüche 1 bis 8, **dadurch gekennzeichnet, dass** an der Bodenplatte (501) Standfüße angeordnet sind, und an den Standfüßen aufsteckbare oder fest damit verbundene Saugnäpfe vorgesehen sind, die mit der Außenfläche in Kontakt stehen.

## Claims

1. Luggage carrier for an additional transport of luggage at outer surfaces of motor vehicles, said luggage carrier being attachable to the outer surfaces by means of an attachment system (100), said luggage carrier comprising a solid base plate (501) and being flat collapsible to a low measure of stowage during non-use, wherein said luggage carrier comprises an upper part (303), made of water-proof textile material, mounted to the base plate (501) as well as rigid side walls (502,503) mounted detachably or by means of a hinge to the base plate (501) in the interior of the luggage carrier,
**characterized in that**
the textile upper part (303), which is strut by strutting ribs (301) between the side walls (502,503), folds to the low measure of stowage after turning down the side walls (502,503) onto the base plate (501) or their detachment, wherein a foldable insulating wall (504) is arranged on the base plate (501) for locking the side walls (502,503).

2. Luggage carrier according to claim 1, **characterized in that** the attachment system (100) is formed as an integral component of the luggage carrier.

3. Luggage carrier according to at least one of the preceding claims, **characterized in that** a functional compartment (601) is integrated into the luggage carrier for accommodating the hook and belt system (100), which is accessible from the outside while being closed and lockable from the inside.

4. Luggage carrier according to at least one of claims 1 to 3, **characterized in that** the attachment system (100) comprises hooks (105) as well as tension belts (106) and side belts (107) with hooks (101).

5. Luggage carrier according to at least one of claims 1 to 4, **characterized in that** the attachment system (100) is configured for being attached to the motor vehicle as a separate system (400) and comprises an adaptor and/or an adaptor plate (401) for attaching the luggage carrier.

6. Luggage carrier according claim 5, **characterized in that** the separate system (400) comprises tension devices (402,403) being constituted by belts for being adjusted to the outer surface of the motor vehicle.

7. Luggage carrier according to at least one of claims 1 to 6, **characterized in that** the luggage carrier comprises clamp buttons (801) for attaching a protective covering.

8. Luggage carrier according to at least one of claims 1 to 7, **characterized in that** the luggage carrier is provided with reels (704) at one side in the region of the base plate (501) and a handle (705) at the other side.

9. Luggage carrier according to at least one of claims 1 to 8, **characterized in that** support stands are arranged on the base plate (501) and the support stands are provided with suction cups which are attachable or fixed to the support stands and which are in contact with the outer surface.

## Revendications

1. Housse porte-bagages pour le transport additionnel de bagages sur des surfaces extérieures de véhicules, qui peut être fixée au moyen d'un système de fixation (100) sur les surfaces extérieures; qui présente une plaque de fond stable (501) et peut être replié à plat en un faible encombrement en cas de non utilisation, dans laquelle la housse porte-bagages comprend une partie supérieure (303) fixée sur la plaque de base (501) constituée d'une matière textile imperméable ainsi que des parois latérales rigides (502, 503), fixées à la manière de charnières dans l'intérieur de la housse sur la plaque de fond (501) ou extractibles,
**caractérisée en ce que**
la partie supérieure textile rigidifiée au moyen de cotes de rigidification (301) entre les parois latérales (502, 503) se replie à plat en un faible encombrement après rabat des parois latérales (502, 503) sur la plaque de fond (501) ou après leur extraction, dans laquelle une paroi d'endiguement rabattable (504) est disposée pour arrêter les parois latérales (502, 503).

2. Housse porte-bagages selon la revendication 1, **caractérisée en ce que** le système de fixation (100) est conçu sous forme de composant intégral de la housse porte-bagages.

3. Housse porte-bagages selon au moins l'une des revendications précédentes, **caractérisée en ce qu'**une pochette fonctionnelle (601), accessible depuis l'extérieur, fermée vers l'intérieur et verrouillable est intégrée dans la housse porte-bagages pour accueillir le système de crochets et de sangles (100).

4. Housse porte-bagages selon au moins l'une des revendications 1 à 3, **caractérisée en ce que** le système de fixation (100) comprend des crochets (105) ainsi qu'une sangle de tension (106) et une sangle latérale (107) avec des crochets (101).

5. Housse porte-bagages selon au moins l'une des revendications 1 à 4, **caractérisée en ce que** le système de fixation (100) est conçu sous la forme d'un système séparé (400) pour la fixation sur le véhicule et présente un adaptateur et/ou une plaque d'adaptateur (401) pour fixer la housse porte-bagages.

6. Housse porte-bagages selon la revendication 5, **caractérisée en ce que** le système séparé (400) présente des dispositifs de tension (402, 403) formés de sangles pour s'adapter à la surface extérieure du véhicule.

7. Housse porte-bagages selon au moins l'une des revendications 1 à 6, **caractérisée en ce que** la housse porte-bagages comprend des boutons de clipsage (801) pour fixer une bâche protectrice.

8. Housse porte-bagages selon au moins l'une des revendications 1 à 7, **caractérisée en ce que** la housse porte-bagages est dotée dans la zone de la plaque de fond (501), sur une face, de rouleaux (704) et, sur l'autre face, d'une poignée (705).

9. Housse porte-bagages selon au moins l'une des revendications 1 à 8, **caractérisée en ce que** des pieds sont disposés sur la plaque de fond (501) et des ventouses pouvant être apposées ou bien solidement reliées avec ceux-ci, qui sont en contact avec la surface extérieure, sont prévues sur les pieds.
